# EUROPEAN PATENT APPLICATION

(11) **EP 1 481 746 A1**
(43) Date of publication of application: **01.12.2004**
(21) Application number: 04101984.5
(22) Date of filing: 07.05.2004
(51) Int. Cl.: B21K 1/16, F16L 19/02

(54) **Metallic hollow element with a sealed connection and method for obtaining the same**

(30) Priority: 08.05.2003 IT VR20030055
(71) Applicant: Chesini, Natalino, 37033 Montorio (IT)
(72) Inventor: Chesini, Natalino, 37033 Montorio (IT)
(74) Representative: Petraz, Gilberto Luigi

(57) **Abstract**

A hollow metal element (10) with excellent seal connection comprises a central body (11) presenting at least one of its longitudinal ends (12) with an enlargement (13) to which a toroid (14), made from a second connecting metal material (18), is fixed, protruding outwards from the element, the second connecting metal material (18) being less hard and more deformable with respect to the material making up the central body (11). A procedure for obtaining this element is also described.

## Description

### TECHNICAL FIELD

This invention concerns a hollow element made from metal equipped with connecting means designed to guarantee excellent seal.

More specifically, this invention refers to a metal tube that can be advantageously used in systems with fluid circulating at medium-high pressure levels, which has a structure that allows it to .be connected to other similar tubes, to couplings or ports in general, in absolute safety and with maximum seal.

According to another aspect, this invention concerns a process for obtaining a hollow metal element with excellent seal connection.

This invention can be applied in the mechanical industry field for the production of items forming part of hydraulic and pneumatic systems as well as in the motor industry sector.

### BACKGROUND ART

It is known that the connection between tubes, couplings, valves and any other metal part of a hydraulic or pneumatic circuit is carried out by means of gas type threads or by means of external ring-clamps designed to grip the tubes at the connecting sections equipped with appropriate washers.

The connecting means can consist of flanges integral with the tubes to be joined, if there is sufficient space, or simply of screws and respective nut screws cut directly in correspondence with the longitudinal ends of the elements to be connected.

When using fluid under pressure, the use of circuital metal elements ensures a high degree of mechanical resistance. but does not guarantee perfect seal at the joints since the threads can deteriorate even during the assembly stage.

On the other hand, while the use of composite plastic materials allows great versatility both in configuration and in elasticity, considerably reducing the risks of damage due to incorrect assembly, the presence of high working temperatures or the presence of fluids containing particularly aggressive substances makes it necessary to use metal alloy materials.

To date, the construction of endothermic motors, that can be used for example for motor traction, foresees the use of hydraulic circuits designed to convey fluid at a high pressure and temperature inside the working cylinder by means of direct injection.

This is the case of gradual combustion engines which, using a less refined fuel, require high temperatures and pressure levels inside the working chamber. These conditions are achieved mainly thanks to the compression exercised by the pistons as they approach the top dead center, but it is particularly important to inject the air-fuel mixture with a relatively high level of pressure and with the mixture heated above all in the starting phase.

One drawback is represented by the fact that the connecting elements of the metal ducts forming the mixture flow circuit foresee a very careful assembly to ensure excellent seal, an extremely important condition as the circulating fluid is inflammable.

Another disadvantage is represented by the fact that, to ensure the necessary seal, the connection of metal tubes for flow to the cylinder head of the motor is achieved by the use of fairly rigid elements which therefore adapt poorly 'to dilations consequent to the temperature range.

### DESCRIPTION OF THE INVENTION

This invention proposes to provide a hollow metal element with excellent seal connection able to eliminate or significantly reduce the disadvantages described above.

The invention also proposes to provide a hollow metal element that can be re-used for subsequent connections to construct a hydraulic or pneumatic circuit.

Not the least aim of this invention is to provide a hollow metal element with excellent seal connection that can be easily produced in order to be economically advantageous.

According to another aspect this invention proposes to provide a procedure for obtaining a hollow metal element with excellent seal connection.

This is achieved by means of a hollow metal element with excellent seal connection with the features described in the main claim and a procedure to obtain the element with the features described in claim 6.

The dependent claims describe advantageous embodiments of the invention.

The hollow metal element with excellent seal connection according to this invention comprises a central body presenting at least one longitudinal end having an enlargement to which a toroid is fixed, made from a second connecting metal material, protruding towards the exterior of the element.

In accordance with the invention, the second connecting metal material is less hard and more deformable than the material forming the central body.

The toroid advantageously protrudes in a direction that is substantially parallel to the axis of the hollow element thus allowing connection with other similar hollow metal elements to form a pneumatic or hydraulic circuit.

According to a particular embodiment of the invention, the central body is made from alloy steel with a high degree of mechanical resistance and suitable for use with fluids at a high temperature.

The second connecting metal material can be copper, aluminium, bronze or any other appropriate metal alloy.

The procedure for obtaining a hollow metal element with excellent seal connection foresees:
- the preparation of a metal tube with high mechanical and thermal resistance;
- the creation of a depression in correspondence with at least one longitudinal end of the tube;
- the positioning and fixing, on the depression, of a second connecting metal material which is less hard and more deformable with respect to the tube;
- the punching, in an axial direction of the end of the tube presenting the depression with the consequent formation of an enlargement, adding the second metal material protruding externally, according to a configuration suitable for connection with other similar tubes or with couplings of a pneumatic or hydraulic circuit.

In accordance with the invention, the positioning and fixing of the second connecting metal material can be performed by electroplating, application by melting, or by hot or cold insertion.

The presence of the second metal material allows excellent seal connection, exploiting its deformability which ensures a perfect adaptation of the matching ends of adjacent tubes.

Moreover, the ductility of the connecting metal material guarantees a reliable connection to fixed parts of the system such as couplings, unions and flow ports present on the cylinder block of an endothermic motor.

### DESCRIPTION OF THE DRAWINGS

Other features and advantages of the invention will become evident on reading the following description of an embodiment of the invention, given as a non-binding example, with the help of the drawings in the attached table, in which:
- figures 1, 3 and 5 represent an elevated front view of a hollow element according to the invention in various embodiment examples;
- figures 2, 4 and 6 show the cross-section views of figures 1, 3 and 5 respectively; and
- figure 7 shows a cross-section view of a blank tube that can be used to obtain a hollow element.

### DESCRIPTION OF AN EMBODIMENT

In the figures, the reference number 10 indicates in general a hollow metal element, in this case a tubular element 10 with excellent seal connection that can be used in pneumatic or hydraulic circuits designed for the passage of fluid at a high temperature and pressure level.

The hollow element 10 consists of a central body 11 with at least one longitudinal end 12 presenting an enlargement 13.

This enlargement presents a connection toroid 14, in metal material that is less hard and more deformable than the central body 11.

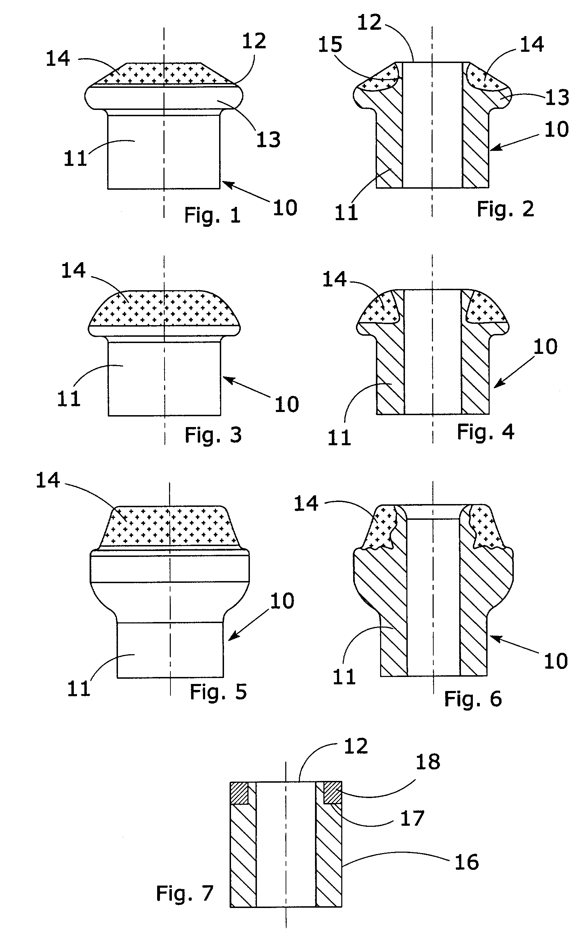

As can be seen in figure 2, according to a particular embodiment of the invention the toroid 14 involves practically all the longitudinal end 12 enclosing a central ring 15 which is relatively reduced and integral with the central body 11.

The toroid 14 advantageously presents a truncated cone configuration converging towards the exterior of the hollow element 10 in such a way 'as to allow a reliable connection with the longitudinal ends 12 of other similar tubes 10.

With reference to figures 3 and 4, it can be seen that the toroid 14 can present a hemispherical configuration for the construction of particular connections with other parts of a pneumatic or hydraulic system.

As can be seen from figures 5 and 6, according to other embodiments of the invention the enlargement 13 can have pronounced axial dimensions, as can the respective connection toroid 14. This embodiment of the hollow metal element 10 is particularly suitable for circuits in which the fluid pressure is fairly high.

The material forming the central body 11 alloy steel with a high degree of mechanical resistance and resistant to high temperatures.

The second connecting metal material, forming the toroid 14, can be copper, aluminium, bronze or any other appropriate metal alloy.

### DESCRIPTION OF A PROCEDURE

With reference to figure 7, the procedure for obtaining a hollow metal element 10 with excellent seal connection can foresee:
- the preparation of a metal tube 16 with high mechanical and thermal resistance;
- the creation of a depression 17 in correspondence with at least one longitudinal end 12 of the tube 16;
- the positioning and fixing, on the depression 17, of a second connecting metal material 18 which is less hard and more deformable with respect to the tube 16;
- the punching, in an axial direction of the end 12 of the tube presenting the depression 17 with the consequent formation of an enlargement 13, adding the second metal material 18 protruding externally, according to a configuration suitable for connection with other similar tubes 10 or with couplings of a pneumatic or hydraulic circuit.

The positioning and fixing of the second connecting metal material 18 can be performed by electroplating, application by melting (using oxyacetylene or laser equipment), by forced insertion following temperature changes, or by insertion and subsequent braze welding with an appropriate binder in inert and non-inert atmosphere.

In this last case, a ring of metal material 18 is prepared and heated to dilate it. The ring is then positioned with play on the depression 17 so that the consequent cooling causes it to grip the depression 17. An alternative consists of cooling the tube 16 at the level of the depression 17, causing it to contract for the positioning of the ring. When the tube 16 is brought back to room temperature it dilates, causing the shrinkage of the metal ring 18.

The invention is described above with reference to a preferred embodiment. It is however clear that the invention is susceptible to numerous modifications and variations that lie within its scope, within the framework of technical equivalents.

## Claims

1. A hollow metal element (10) with excellent seal connection **characterised in that** it comprises a central body (11) presenting at least one of its longitudinal ends (12) with an enlargement (13) to which a toroid (14), made from a second connecting metal material (18), is fixed, protruding outwards from the element, and **in that** the second connecting metal material (18) is less hard and more deformable with respect to the material making up the central body (11).

2. An element (10) according to claim 1, **characterised in that** the toroid (14) protrudes in a direction substantially parallel to the axis of the central body (11).

3. An element (10) according to any of the foregoing claims, **characterised in that** the toroid (14) presents an outer truncated cone configuration converging towards the outside of the element (10) or a hemispherical configuration.

4. An element (10) according to any of the foregoing claims, **characterised in that** the central body (11) 'is made from alloy steel with a high degree of mechanical resistance and suitable for use with high temperature fluids.

5. An element (10) according to any of the foregoing claims, **characterised in that** the toroid (14) is made from copper or aluminium or any other appropriate metal alloy such as, for example, bronze.

6. A procedure for obtaining a hollow metal element (10) with excellent seal connection in which the following working stages are foreseen:
- the preparation of a metal tube (16) with high mechanical and thermal resistance;
- the creation of a depression (17) in correspondence with at least one longitudinal end (12) of the tube (16);
- the positioning and fixing, on the depression (17), of a second connecting metal material (18) which is less hard and more deformable with respect to the tube (16);
- the punching, in an axial direction of the end (12) of the tube presenting the depression (17) with the consequent formation of an enlargement (13), adding the second metal material (18) protruding externally, according to a configuration suitable for connection with other similar tubes (10) or with couplings of a pneumatic or hydraulic circuit.

7. A procedure according to claim 6, **characterised in that** the positioning and fixing of the second connecting metal material (18) is carried out by electroplating.

8. A procedure according to claim 6, **characterised in that** the positioning and fixing of the second connecting metal material (18) is carried out by melting.

9. A procedure according to claim 8, **characterised in that** the melting is carried out by using oxyacetylene equipment.

10. A procedure according to claim 8, **characterised in that** the melting is carried out by using laser equipment.

11. A procedure according to claim 6, **characterised in that** the positioning and fixing of the second connecting metal material (18) is carried out by forced insertion following temperature changes.

12. A procedure according to claim 10, **characterised in that** the positioning and fixing of the second connecting metal material (18) is carried out by forced insertion.

13. A procedure according to claim 6, **characterised in that** the positioning and fixing of the second connecting metal material (18) is carried out by forced insertion and subsequent braze welding with an appropriate binder.

14. A procedure according to claim 6, **characterised in that** the positioning and fixing of the second connecting metal material (18) is carried out by forced insertion and subsequent braze welding with an appropriate binder in inert atmosphere.
